# EUROPEAN PATENT APPLICATION

(11) **EP 4 782 392 A1**
(43) Date of publication of application: **29.07.2026**
(21) Application number: 26152117.3
(22) Date of filing: 15.01.2026
(51) Int. Cl.: B82Y 30/00, C09D 11/322, C09D 11/52, G04B 19/12, G04B 37/22, G04B 45/00

(54) **DIAL, TIMEPIECE, AND METHOD FOR MANUFACTURING DIAL**

(30) Priority: 23.01.2025 JP 2025009661
(71) Applicant: Seiko Epson Corporation, Tokyo 160-8801 (JP)
(72) Inventor: SAKODA, Seisho, Suwa-shi, Nagano, 392-8502 (JP)
(74) Representative: MERH-IP Matias Erny Reichl Hoffmann Patentanwälte PartG mbB

(57) **Abstract**

A dial includes a metallic base, a metal layer formed at a surface of the base, an intermediate layer disposed on a surface side of the metal layer and having light transmittance, and a first dot layer partially disposed on a surface side of the intermediate layer. The first dot layer has a plurality of first metal dots formed by ink jet printing using a metal nano ink containing a first metal, and a first metal film made of a second metal different from the first metal and formed at a surface side of the first metal dot.

## Description

The present application is based on, and claims priority from JP Application Serial Number 2025-009661, filed January 23, 2025, the disclosure of which is hereby incorporated by reference herein in its entirety.

### BACKGROUND

### 1. Technical Field

The present disclosure relates to a dial, a timepiece, and a method for manufacturing a dial.

### 2. Related Art

JP-A-2000-111660 discloses a dial on which characters or images are formed by an ink jet recording method. In order to manufacture the dial of JP-A-2000-111660, a nickel plating is performed on a substrate on which a brass plate is punched out in a cylindrical shape by press processing, and then a surface treatment is performed by silver plating or gold plating to form a plating surface. Next, a water-soluble polymer such as polyvinyl alcohol is coated on the plating surface to form an ink receiving layer that is a transparent film. Next, ink droplets are ejected from nozzles of an ink jet head to form pixels on the ink receiving layer.

In JP-A-2000-111660, only characters or images are formed by using ink by simply performing ink jet printing, and there is a problem that it is difficult to express a design with a high-grade feeling. In particular, when a relatively inexpensive metal ink is used as an ink, it is difficult to create a high-grade feeling, and on the other hand, when a metal ink made of a relatively expensive precious metal is used, the cost of the dial is increased, and the mass productivity is also reduced, so that there is a problem of reduced practicality.

### SUMMARY

According to an aspect of the present disclosure, there is provided a dial including a metallic base, a metal layer formed at a surface of the base, an intermediate layer disposed on a surface side of the metal layer and having light transmittance, and a first dot layer partially disposed on a surface side of the intermediate layer, in which the first dot layer has a plurality of first metal dots formed by ink jet printing using a metal nano ink containing a first metal, and a first metal film made of a second metal different from the first metal and formed at a surface side of the first metal dot.

According to another aspect of the present disclosure, there is provided a dial including a non-metallic base, and a first dot layer partially disposed on a surface side of the base, in which the first dot layer has a plurality of first metal dots formed by ink jet printing using a metal nano ink containing a first metal, and a first metal film made of a second metal different from the first metal and formed at a surface side of the first metal dot.

According to still another aspect of the present disclosure, there is provided a timepiece including the dial and a case that houses the dial.

According to yet still another aspect of the present disclosure, there is provided a method for manufacturing a dial, the method including forming a metal layer at a surface of a metallic base, forming an intermediate layer having light transmittance at a surface side of the metal layer, partially forming a plurality of first metal dots formed by ink jet printing using a metal nano ink containing a first metal at a surface side of the intermediate layer, and forming a first metal film made of a second metal different from the first metal at a surface side of each of the first metal dots.

### BRIEF DESCRIPTION OF THE DRAWINGS

FIG. 1 is a front view illustrating a timepiece according to a first embodiment.
FIG. 2 is a cross-sectional view illustrating a main portion of a dial of a timepiece of the first embodiment.
FIG. 3 is an exploded perspective view illustrating a layer configuration of the dial of the first embodiment.
FIG. 4 is a flowchart illustrating a method for manufacturing a dial according to the first embodiment.
FIG. 5A is a cross-sectional view illustrating the dial after a transparent resin laminating step of the first embodiment is performed.
FIG. 5B is a cross-sectional view illustrating the dial after an ink jet printing step of the first embodiment is performed.
FIG. 5C is a cross-sectional view illustrating the dial after a second plating treatment step of the first embodiment is performed.
FIG. 5D is a cross-sectional view illustrating the dial after a protective layer laminating step of the first embodiment is performed.
FIG. 6 is a diagram illustrating states of a base, a binary pattern, after ink jet printing, and after non-electrolytic gold plating in the first embodiment.
FIG. 7 is a flowchart illustrating a method for manufacturing a dial according to a second embodiment.
FIG. 8A is a cross-sectional view illustrating the dial after a second plating treatment step of the second embodiment is performed.
FIG. 8B is a cross-sectional view illustrating the dial after a second ink jet printing step of the second embodiment is performed.
FIG. 8C is a cross-sectional view illustrating the dial after a third plating treatment step of the second embodiment is performed.
FIG. 8D is a cross-sectional view illustrating the dial after a protective layer laminating step of the second embodiment is performed.
FIG. 9 is a cross-sectional view illustrating a main portion of a dial of a third embodiment.
FIG. 10 is a flowchart illustrating a method for manufacturing a dial according to the third embodiment.
FIG. 11 is a cross-sectional view illustrating a main portion of a dial of a fourth embodiment.
FIG. 12 is a cross-sectional view illustrating a main portion of a dial of a modification example.

### DESCRIPTION OF EMBODIMENTS

### First Embodiment

Hereinafter, a timepiece 1 of an embodiment of the present disclosure will be described with reference to the drawings.

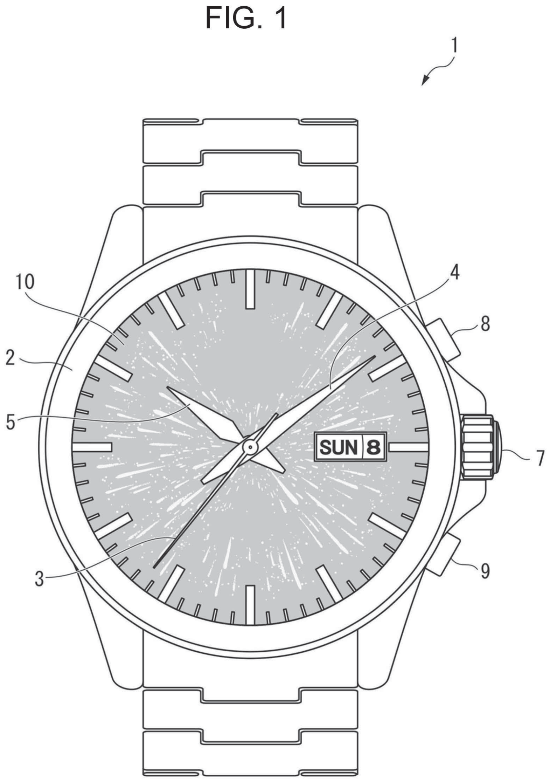

FIG. 1 is a front view illustrating the timepiece 1. In the present embodiment, the timepiece 1 is configured as a wristwatch worn on a wrist of a user.

As illustrated in FIG. 1, the timepiece 1 includes a metal case 2. Inside the case 2, a disk-shaped dial 10, a seconds hand 3, a minute hand 4, an hour hand 5, a crown 7, an A button 8, and a B button 9 are provided.

### Dial

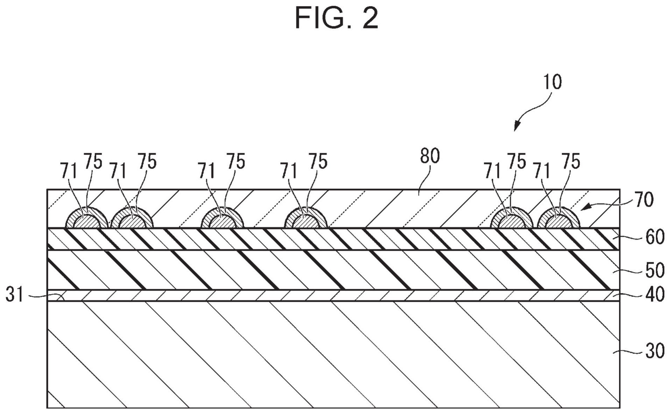

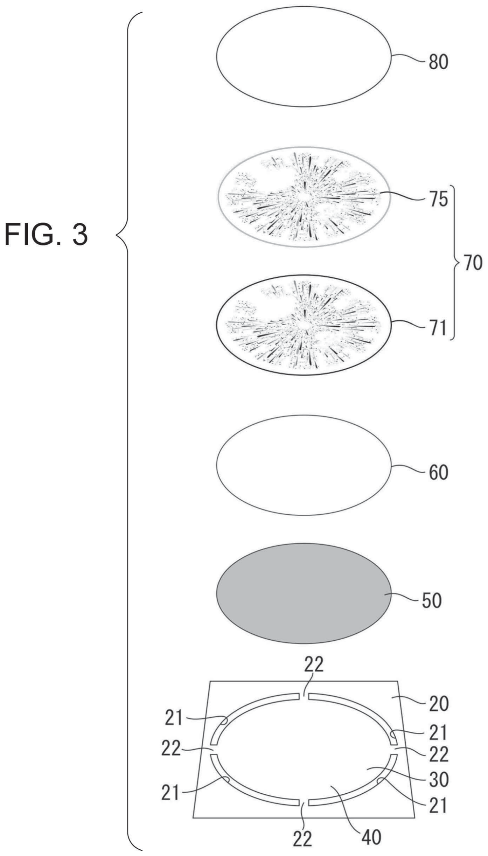

FIG. 2 is an enlarged cross-sectional view illustrating a main portion of the dial 10, and FIG. 3 is an exploded perspective view in which each layer configuration of the dial 10 is described in an exploded manner. In the present embodiment, a surface of the dial 10 means a surface of the timepiece 1 on a side of a cover glass, that is, the surface on a side on which the dial 10 is visually recognized, in a thickness direction of the dial 10. Similarly, surfaces of a base and each layer described below also mean the surface on the side of the cover glass of the timepiece 1.

As illustrated in FIG. 2, the dial 10 includes a base 30. The base 30 of the first embodiment is made of metal, specifically, brass, so that the cost can be reduced.

A metal layer 40 is formed at a surface 31 of the base 30. The metal layer 40 is formed by, for example, plating the surface 31 of the base 30 with a metal. The metal for plating may be, for example, a single metal such as nickel, silver, palladium, rhodium, or gold, or may be an alloy such as pink gold. In addition, the specific plating method may be selected according to the material of the base 30, the type of a first metal, or the like. For example, when nickel is plated on the surface 31 of the brass base 30, electrolytic plating or the like may be used.

The surface 31 of the base 30 may be a flat surface, but may have an uneven pattern. For example, the uneven pattern may be formed by performing a hairline finish radially from the plan center of the surface 31. A recess portion may be formed by, for example, cutting processing, laser processing, chemical removal processing, polishing processing, forging/casting processing, or the like.

A decorative layer 50 having light transmittance formed by coating a colored paint is provided on the surface side of the metal layer 40. The colored paint is, for example, a colored paint containing a pigment, a synthetic resin, a solvent, or the like, and the decorative layer 50 is formed by coating the surface of the metal layer 40 with the colored paint by painting, vapor deposition, or the like. The color of the colored paint may be selected according to the design of the dial 10, and can be selected from blue, green, black, white, or the like by using various pigments.

An intermediate layer 60 is formed at the surface of the decorative layer 50. The intermediate layer 60 is made of a resin material having light transmittance. The resin material may be any resin material configured to transmit light, such as a transparent resin or a translucent resin, and examples thereof include an acrylic resin, a urethane resin, a polyethylene resin, a polyester resin, or the like. The intermediate layer 60 of the present embodiment is made of an acrylic resin paint. In addition, as a method of forming the intermediate layer 60 at the surface of the decorative layer 50, various coating methods or the like such as spin coating, dipping, brush coating, spray coating, electrostatic coating, and electrodeposition coating can be used.

A first dot layer 70 is formed at the surface of the intermediate layer 60. The first dot layer 70 includes a first metal dot 71 formed by ink jet printing and a first metal film 75 formed at the surface of the first metal dot 71 by plating treatment.

The first metal dot 71 is formed by ink jet printing using a metal nano ink containing metal nanoparticles of the first metal. Here, the metal nano ink is a composition in which the metal nanoparticles are dispersed in a dispersion medium. The metal nanoparticles are metal particles having a particle size of 1 nm or more and 1 µm or less. The first metal is one or more types selected from gold, silver, copper, platinum, nickel, palladium, rhodium, iridium, or the like, and silver is used in the present embodiment. The metal for forming the metal layer 40 by plating and the first metal included in the metal nano ink for the first metal dot 71 may be the same metal or may be different metals.

The first metal dot 71 is formed by causing the metal nano ink of the first metal to land on the surface of the intermediate layer 60 based on a binary pattern that is a preset printing pattern. In the present embodiment, the first metal dot 71 is formed by performing ink jet printing of a binary pattern with a silver nano ink by using silver as the first metal. In the present embodiment, as illustrated in FIGS. 1 and 3, a meteor pattern is printed by ink jet printing to form the first metal dot 71. In addition, the metal nano ink that has landed on the surface of the intermediate layer 60 is not permeated into the intermediate layer 60 and is dried on the surface of the intermediate layer 60, so that, as illustrated in FIG. 2, the first metal dot 71 on the intermediate layer 60 is formed in a substantially hemispherical shape.

The binary pattern of the present embodiment represents a printing pattern, and is image data composed of two types of data, that is, a pixel at which ink is ejected by the image printing apparatus and a pixel at which ink is not ejected by the image printing apparatus. The printing pattern used for forming a plurality of first metal dots 71 in the present embodiment is not limited to the binary pattern. The printing pattern may be, for example, image data composed of three or more types of data, such as image data composed of a pixel at which ink is not ejected by the image printing apparatus, a pixel at which a relatively small amount of ink is ejected by the image printing apparatus, and a pixel at which a relatively large amount of ink is ejected by the image printing apparatus, or image data composed of a pixel at which ink is not ejected by the image printing apparatus, a pixel at which a first ink is ejected by the image printing apparatus, and a pixel at which a second ink of a type different from the first ink is ejected by the image printing apparatus.

The first metal film 75 is formed by plating the surface of the first metal dot 71 with a second metal different from the first metal. By immersing the base 30 provided with the first metal dot 71 by using the silver nano ink in a plating solution of the second metal and performing a non-electrolytic plating treatment in which the silver nano ink is used as a plating base, the second metal can be plated only on the first metal dot 71 printed with the silver nano ink. When a metal having a smaller ionization tendency than the first metal is used as the second metal, "displacement plating" can be used in which the second metal in the plating solution is deposited on the surface of the first metal of the plating base by utilizing the difference in the ionization tendency between the first metal that is the plating base and the second metal in the plating solution. The ionization tendency is a property that a metal releases an electron in water or an aqueous solution to be a positive ion. When the ionization tendency is large, it is likely to be a positive ion, and since it is likely to release an electron, it is likely to be oxidized. When the ionization tendency is small, it is difficult to be a positive ion, and since it is difficult to release an electron, it is difficult to be oxidized.

For example, when silver is used as the first metal and gold is used as the second metal, the ionization tendency of the silver nano ink, which is to be the plating base, is greater than that of gold in the plating solution, so that, when the base 30 on which the silver nano ink is ink jet printed is immersed in the gold plating solution, electrons are released from the silver nano ink, and gold is deposited on the surface of the first metal dot 71 of the silver nano ink to form the first metal film 75 when the released electrons are received by the gold ions in the gold plating solution.

The method of forming the first metal film 75 at the surface of the first metal dot 71 is not limited to the "displacement plating" using the difference in ionization tendency between the first metal and the second metal, and may be a plating method in which the first metal dot 71 is used as a plating base and the second metal is plated by non-electrolytic plating to form the first metal film 75.

As described above, the first metal dot 71 formed by ink jet printing based on the binary pattern and the first metal film 75 formed at the surface of the first metal dot 71 by plating treatment using the first metal dot 71 as a plating base form the first dot layer 70 partially at the surface of the intermediate layer 60, and a predetermined pattern is printed.

A protective layer 80 having light transmittance is formed at the surface side of the intermediate layer 60 and the first dot layer 70. That is, since the surface of the intermediate layer 60 is partially provided with the first dot layer 70 by the first metal dot 71 and the first metal film 75, there are a portion at which the intermediate layer 60 is exposed and a portion at which the first dot layer 70 is provided, and the protective layer 80 is formed at the surface side of each of the portions.

The protective layer 80 is made of a resin material having light transmittance. The resin material may be any resin material configured to transmit light, such as a transparent resin or a translucent resin, and examples thereof include an acrylic resin, a urethane resin, a polyethylene resin, a polyester resin, or the like. The protective layer 80 of the present embodiment is made of an acrylic resin paint. In addition, as a method of forming the protective layer 80 at the surface of the intermediate layer 60 and the first dot layer 70, various coating methods such as spin coating, dipping, brush coating, spray coating, electrostatic coating, and electrodeposition coating can be used. The thickness dimension of the protective layer 80 may be a thickness dimension that can cover the first dot layer 70.

### Method For Manufacturing Dial

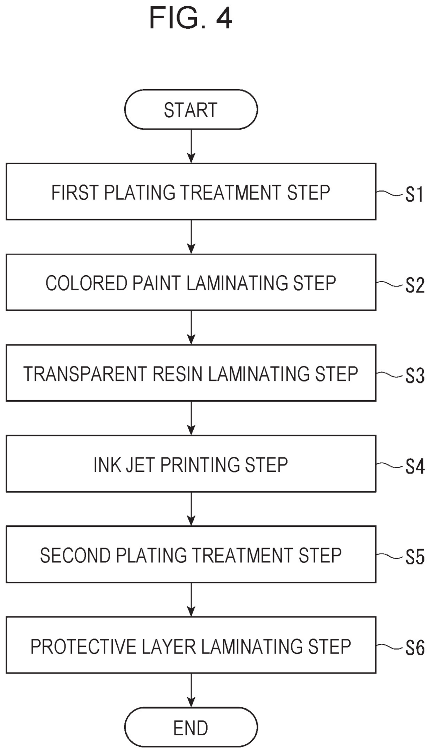

Next, a method for manufacturing the dial 10 will be described with reference to FIGS. 3, 4, and 5A to 5D.

As illustrated in FIG. 3, four arc-shaped grooves 21 are processed to cut out the disk-shaped base 30 from a rectangular plate-shaped brass substrate 20. The base 30 is coupled to the outside substrate 20 by four coupling portions 22.

Next, a first plating treatment step S1 of forming the metal layer 40 at the surface 31 of the base 30 is performed. In the first plating treatment step S1, for example, the metal layer 40 is formed by nickel plating or the like.

Next, a colored paint laminating step S2 of forming the decorative layer 50 at the surface of the metal layer 40 is performed. In the colored paint laminating step S2, for example, the decorative layer 50 is formed by applying a colored paint containing a pigment.

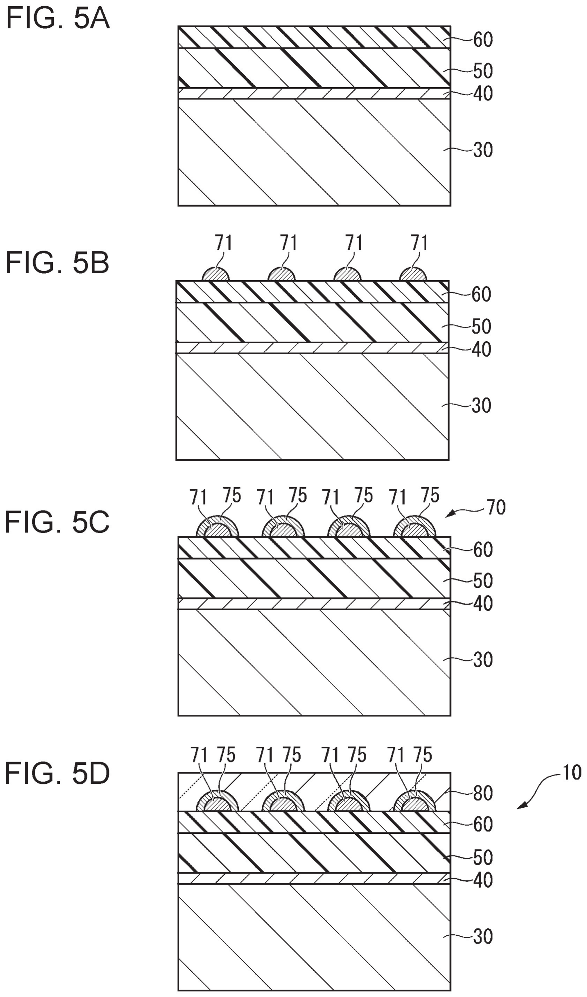

Next, a transparent resin laminating step S3 of forming the intermediate layer 60 at the surface of the decorative layer 50 is performed. In the transparent resin laminating step S3, for example, the intermediate layer 60 is formed by applying an acrylic resin paint. The transparent resin laminating step S3 is forming an intermediate layer having light transmittance at the surface side of the metal layer 40 via the decorative layer 50. After the transparent resin laminating step S3 is performed, as illustrated in FIG. 5A, the metal layer 40, the decorative layer 50, and the intermediate layer 60 are sequentially laminated on the surface side of the base 30.

Next, an ink jet printing step S4 is performed to land the first metal dot 71 on the surface of the intermediate layer 60. In the ink jet printing step S4, the metal nano ink containing the first metal such as silver or copper is ink jet printed based on the binary pattern corresponding to the pattern expressed on the dial 10, so that as illustrated in FIG. 5B, the first metal dot 71 is landed on the surface of the intermediate layer 60. Therefore, the ink jet printing step S4 is partially forming the plurality of first metal dots 71 formed by ink jet printing using the metal nano ink containing the first metal at the surface side of the intermediate layer 60.

Next, a second plating treatment step S5 is performed to form the first metal film 75 at the surface of the first metal dot 71. In the second plating treatment step S5, the base 30 on which the first metal dot 71 has landed on the surface of the intermediate layer 60 in the ink jet printing step S4 is immersed in a plating solution of gold or platinum, which is the second metal, and the first metal film 75 is formed at the surface of the first metal dot 71 by non-electrolytic plating in which the first metal dot 71 is used as a plating base, as illustrated in FIG. 5C. Therefore, the second plating treatment step S5 is forming the first metal film 75 made of the second metal different from the first metal at the surface side of each of the first metal dots 71.

As a result, the first dot layer 70 in which a pattern is partially formed by the first metal dot 71 and the first metal film 75 is formed at the surface of the intermediate layer 60.

Next, the protective layer laminating step S6 is performed, and as illustrated in FIG. 5D, the protective layer 80 is formed at the surfaces of the intermediate layer 60 and the first dot layer 70. In the protective layer laminating step S6, the protective layer 80 is formed by coating an acrylic resin paint.

The dial 10 is manufactured by the above steps.

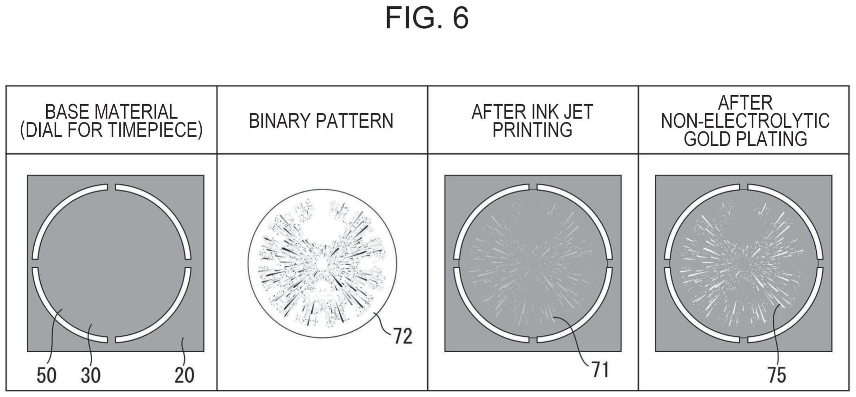

FIG. 6 illustrates each state of the dial manufactured based on the present embodiment. The column of the base in FIG. 6 illustrates the state of the substrate 20 after the transparent resin laminating step S3 is performed. After the transparent resin laminating step S3 is performed, the metal layer 40, the decorative layer 50, and the intermediate layer 60 are laminated on the surface of the substrate 20. Since the intermediate layer 60 is a transparent resin, in the example of FIG. 6, the surface of the substrate 20 has a color of the decorative layer 50 formed of, for example, a blue-based colored paint.

The binary pattern column indicates data for a printing pattern. In the example of FIG. 6, the binary pattern 72 imitating a meteor is used. In the binary pattern 72, a black portion is a portion at which the ink is ejected. The binary pattern is not limited to the pattern imitating a meteor, and may be a pattern imitating a plant such as a pampas grass, ivy, or a flower or may be a pattern imitating the moon or the starry sky, and may be set according to the design of the dial.

The column after the ink jet printing in FIG. 6 illustrates a state where the first metal dot 71 is formed at the surface of the intermediate layer 60 by ink jet printing using the metal nano ink. In the ink jet printing, the first metal dot 71 is partially landed in the range of the base 30 corresponding to the binary pattern. In the example of FIG. 6, silver nano ink is used as the metal nano ink for printing. In the present embodiment, the base color of the decorative layer 50 is to be the color of the base 30, and the first metal dot 71 is to have a silver color.

The column after the non-electrolytic gold plating in FIG. 6 illustrates a state in which the first metal film 75 is plated with gold, which is the second metal, on the surface of the first metal dot 71. When the first metal film 75 is formed at the first metal dot 71 by gold plating, a portion of the first metal dot 71 can be colored in gold to also enhance the brightness, and the color development and a high-grade feeling can be enhanced as compared with the case where the pattern is expressed only by the first metal dot 71.

### Effects of First Embodiment

According to the present embodiment, the following effects can be obtained.

Since the dial 10 is obtained by forming the first metal film 75 at the surface side of the first metal dot 71, the dial 10 having a high-grade feeling can be realized, and further, the practicality such as mass productivity can also be improved. That is, since the first metal dot 71 is formed of a relatively inexpensive metal nano ink using silver, copper, or the like as the first metal, the cost can be reduced. In addition, since the first metal film 75 is formed by using a precious metal such as gold or platinum as the second metal, the color development and brightness of the first dot layer 70 can be improved, and a pattern having a high-grade feeling can be expressed. In addition, since the first metal film 75 is laminated on the surface side of the first metal dot 71, the amount of the second metal used can be reduced, and the cost can be reduced. Therefore, the dial 10 with a high-grade feeling can be provided, so that the practicality such as mass productivity can also be improved.

The background color of the pattern by the first dot layer 70 can be set to the color of the decorative layer 50 that is visually recognized via the intermediate layer 60 having light transmittance. Therefore, the background color by the decorative layer 50 can be set according to the pattern or the color development of the first dot layer 70, and the design of the dial 10 can be further enhanced.

Since the intermediate layer 60 formed of a synthetic resin material or the like having light transmittance is provided on the surface side of the metal layer 40, when the plating treatment is performed using the first metal dot 71 as a plating base, the first metal film 75 can be formed only at the surface side of the first metal dot 71, and a film formation treatment of the first metal film 75 can be easily performed.

Since the protective layer 80 is provided on the surface side of the first dot layer 70, the first dot layer 70 is not exposed to the surface of the dial, and the first dot layer 70 can be prevented from being peeled off.

### Second Embodiment

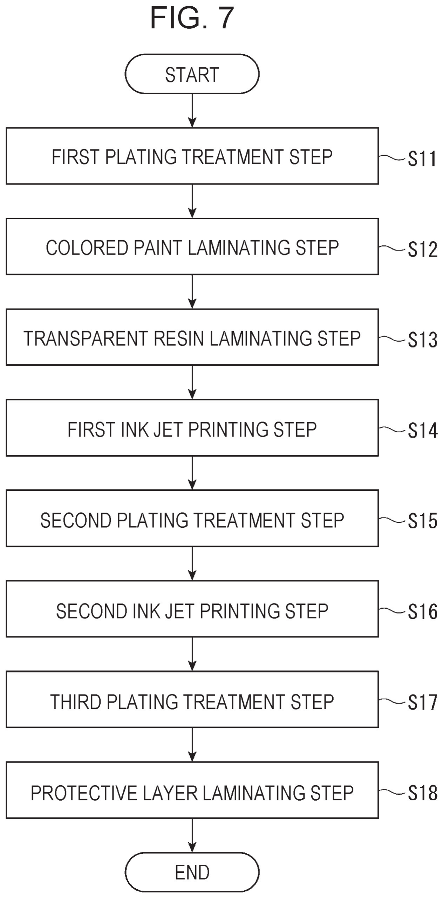

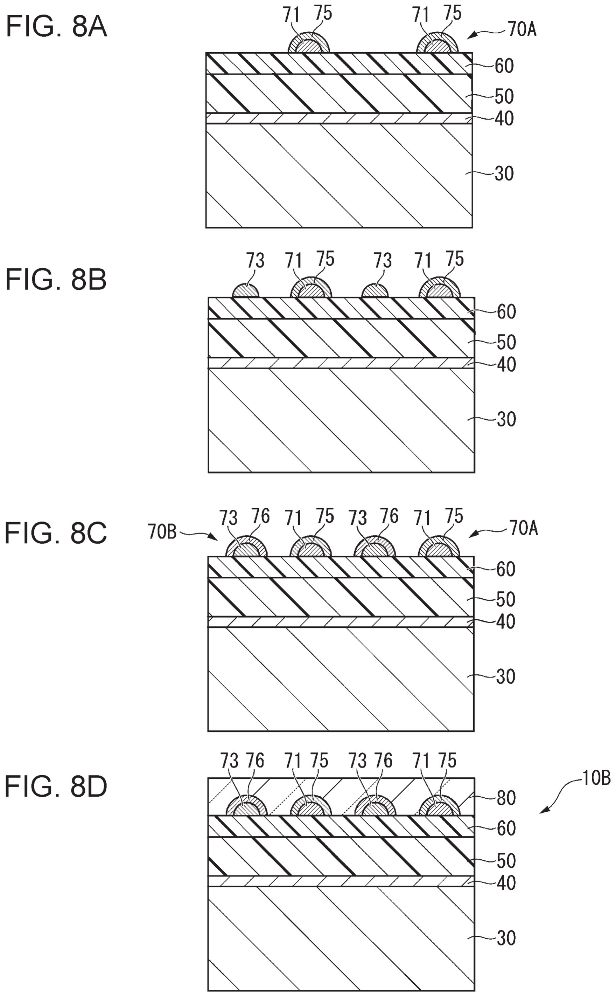

Next, a second embodiment will be described with reference to FIGS. 7 and 8A to 8D. A dial 10B of the second embodiment is different from the dial 10 of the first embodiment in that a first dot layer 70A formed of the first metal dot 71 in which the first metal film 75 is laminated, and a second dot layer 70B formed of a second metal dot 73 in which a second metal film 76 is laminated are included. Hereinafter, the differences will be mainly described.

FIG. 7 is a flowchart describing a method for manufacturing the dial 10B. In FIG. 7, a first plating treatment step S11 of laminating the metal layer 40 on the surface of the base 30, a colored paint laminating step S12 of laminating the decorative layer 50 on the surface of the metal layer 40, and a transparent resin laminating step S13 of laminating the intermediate layer 60 on the surface of the decorative layer 50 are the same as the first plating treatment step S1, the colored paint laminating step S2, and the transparent resin laminating step S3 of the first embodiment, so that the description thereof will be omitted.

After the transparent resin laminating step S13 is performed, a first ink jet printing step S14 is performed, and the first metal nano ink containing the first metal is ejected by ink jet printing to land the first metal dot 71 on the surface of the intermediate layer 60. In the second embodiment, since the pattern is formed by two-stage printing of the first ink jet printing step S14 and a second ink jet printing step S16 described later, the ink jet printing is performed based on a first binary pattern in the first ink jet printing step S14.

Next, a second plating treatment step S15 is performed, and as illustrated in FIG. 8A, the first metal film 75 is formed at the surface of the first metal dot 71. In the second plating treatment step S15, as in the first embodiment, the first metal film 75 is formed at the surface of the first metal dot 71 by non-electrolytic plating in which the base 30 is immersed in a plating solution of gold, which is the second metal, using the first metal dot 71 as a plating base. Therefore, the first ink jet printing step S14 and the second plating treatment step S15 are the same treatment as the ink jet printing step S4 and the second plating treatment step S5 of the first embodiment.

Next, the second ink jet printing step S16 is performed, and a second metal nano ink containing a third metal is ejected by ink jet printing to land the second metal dot 73 on the surface of the intermediate layer 60. In the second ink jet printing step S16, ink jet printing is performed based on a second binary pattern such that the second metal dot 73 is ejected to a different position from the first metal dot 71 formed in the first ink jet printing step S14. As a result, as illustrated in FIG. 8B, the second metal dot 73 is formed at a different position from the first metal dot 71 formed in the first ink jet printing step S14. The first metal of the first metal dot 71 and the third metal of the second metal dot 73 may be the same metal or may be different metals. In the present embodiment, the first metal and the third metal are the same silver, and the first metal nano ink and the second metal nano ink are the same silver nano ink.

Next, a third plating treatment step S17 is performed, and as illustrated in FIG. 8C, the second metal film 76 is formed at the surface of the second metal dot 73. In the third plating treatment step S17, the second metal film 76 is formed at the surface of the second metal dot 73 by non-electrolytic plating in which the base 30 is immersed in a plating solution of platinum, which is a fourth metal, using the second metal dot 73 as a plating base.

As a result, the first dot layer 70A is formed by the first metal dot 71 on which the first metal film 75 is laminated on the surface, and the second dot layer 70B is formed by the second metal dot 73 on which the second metal film 76 is laminated on the surface.

When the first metal film 75 and the second metal film 76 are formed at the surfaces of the first metal dot 71 and the second metal dot 73 by non-electrolytic plating, it is necessary to perform non-electrolytic plating with a metal having a small ionization tendency. This is because, when the second metal film 76 is formed by non-electrolytic plating using a metal having a smaller ionization tendency than the first metal film 75, the second metal film 76 is formed not only at the surface of the second metal dot 73 but also at the surface of the first metal film 75. That is, when gold and platinum are used as the second metal and the fourth metal, because gold has a smaller ionization tendency than platinum, gold may be used as the second metal in the second plating treatment step S15, and platinum may be used as the fourth metal in the third plating treatment step S17.

Next, the protective layer laminating step S18 is performed, and the protective layer 80 is formed at the surfaces of the intermediate layer 60, the first dot layer 70A, and the second dot layer 70B as illustrated in FIG. 8D. Since the protective layer laminating step S18 is the same treatment as the protective layer laminating step S6, the description thereof will be omitted.

### Effects of Second Embodiment

According to the dial 10B of the second embodiment, the first dot layer 70A by the first metal dot 71 on which the first metal film 75 is laminated on the surface and the second dot layer 70B by the second metal dot 73 on which the second metal film 76 is laminated on the surface are provided, so that the same operational effects as those of the first embodiment can be obtained. In addition, since a pattern is formed by the golden dot formed by the first metal film 75 formed by gold plating and the silver white dot formed by the second metal film 76 formed by platinum plating, the design and the high-grade feeling of the dial 10B can be enhanced.

### Third Embodiment

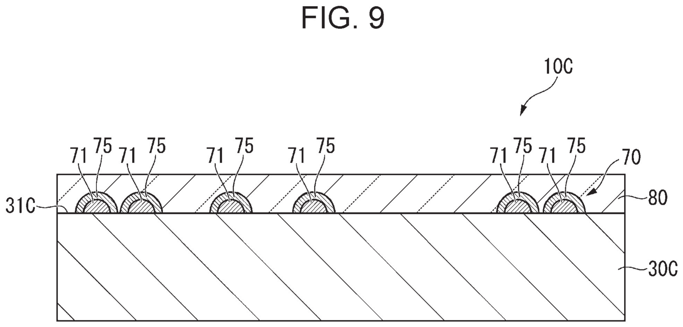

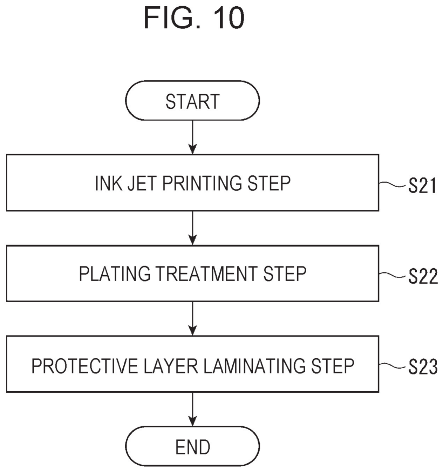

Next, a third embodiment will be described with reference to FIGS. 9 and 10. A dial 10C of the third embodiment is different from the first and second embodiments in that the first metal dot 71 is ejected onto a surface 31C of a non-metallic base 30C and the first metal film 75 is formed at the surface of the first metal dot 71 by plating treatment.

The base 30C of the dial 10C is made of a non-metallic material such as a shell or a synthetic resin material. For example, by cutting out a mother-of-pearl to form the base 30C, a design in which the color tone changes due to the addition and subtraction of light can be expressed.

In order to manufacture the dial 10C of the third embodiment, as illustrated in FIG. 10, the first metal dot 71 is formed by performing the ink jet printing step S21 using silver nano ink or the like on the surface 31C of the base 30C formed from a mother-of-pearl or the like.

Next, a plating treatment step S22 is performed to form the first metal film 75 at the surface of the first metal dot 71. The plating treatment step S22 uses the displacement plating as in the first embodiment, and the first metal film 75 is laminated only on the surface of the first metal dot 71. As a result, the first dot layer 70 is formed at the surface 31C of the base 30C.

Next, a protective layer laminating step S23 is performed to laminate the protective layer 80 on the surfaces of the base 30C and the first dot layer 70. Since the protective layer laminating step S23 is the same treatment as the protective layer laminating step S6, the description thereof will be omitted.

### Effects of Third Embodiment

According to the dial 10C of the third embodiment, since the pattern is formed in the first dot layer 70 in which the first metal dot 71 and the first metal film 75 are laminated, the same operational effects as those of the first embodiment can be obtained.

Since the base 30C of a non-metallic material is used, the metal layer 40, the decorative layer 50, and the intermediate layer 60 are not required, the number of manufacturing steps can be reduced, and the manufacturing cost can also be reduced.

Since the base 30C serves as a background of the pattern formed by the first dot layer 70, the dial 10C utilizing the material of the base 30C can be realized by composing the base 30C with a mother-of-pearl or the like.

### Fourth Embodiment

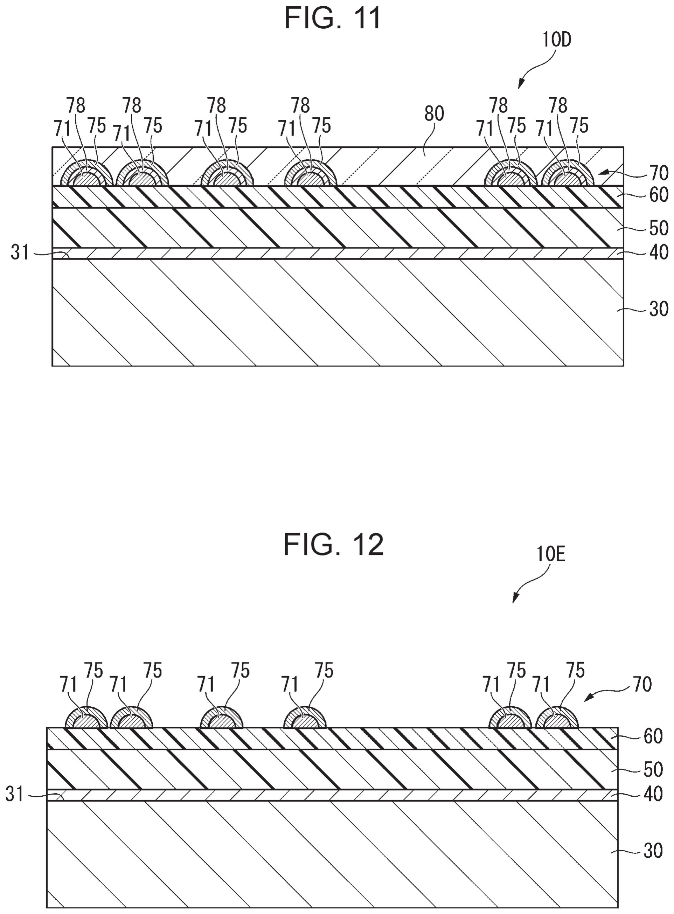

Next, a fourth embodiment will be described with reference to FIG. 11. A dial 10D of the fourth embodiment is different in that a bonding film 78 made of a fifth metal is provided between the first metal dot 71 and the first metal film 75. The bonding film 78 enhances the adhesion of the first metal film 75, and, for example, is formed by non-electrolytic plating of copper or nickel, which is the fifth metal different from gold or platinum, which is the second metal, on the first metal dot 71 formed of silver nano ink. After the bonding film 78 is formed, the first metal film 75 is formed by non-electrolytic plating of gold or platinum, which is the second metal, on the surface of the bonding film 78. Since other configurations are the same as those of the dial 10 of the first embodiment, the description thereof will be omitted.

### Effects of Fourth Embodiment

According to the dial 10D of the fourth embodiment, in addition to the same effects as those of the first embodiment, the bonding film 78 made of the fifth metal is provided between the first metal dot 71 and the first metal film 75, so that the adhesion of the first metal film 75 can be enhanced as compared with a case where the first metal film 75 is directly laminated on the first metal dot 71.

### Modification Example

The present disclosure is not limited to the above-described embodiments, and modifications, improvements, and the like within the scope of achieving the object of the present disclosure are included in the present disclosure.

For example, in the first embodiment, the protective layer 80 is provided on the surface of the dial 10, but as illustrated in FIG. 12, a dial 10E may not include the protective layer 80. In other embodiments as well, the dial may not include the protective layer.

In addition, in the dials 10, 10B, 10D, and 10E, the decorative layer 50 is provided between the metal layer 40 and the intermediate layer 60, but the intermediate layer 60 may be laminated on the surface of the metal layer 40 without providing the decorative layer 50. In this case, the background of the pattern by the first dot layer 70, the first dot layer 70A, and the second dot layer 70B is set by the metal layer 40 that is visually recognized through the intermediate layer 60, so that a dial that takes advantage of the color development or the like of the metal layer 40 can be provided.

In the dial 10B of the second embodiment, the pattern is formed by the two types of the first dot layer 70A and the second dot layer 70B, but the pattern may be formed by three or more types of dot layers. In addition, each of the plurality of types of dot layers may include a bonding film in the same manner as the dial 10D.

In the dial 10D of the fourth embodiment, the first dot layer 70 is formed at the surface 31C of the base 30C of a non-metallic material, but, as in the second embodiment, two or more types of dot layers may be formed at the surface 31C of the base 30C of a non-metallic material. In addition, the dial 10D directly forms the first dot layer 70 at the surface 31C of the base 30C, but the intermediate layer 60 having light transmittance may be laminated on the surface 31C of the base 30C, or the decorative layer 50 and the intermediate layer 60 may be laminated, and the first dot layer 70 may be formed at the surface of the intermediate layer 60. Summary of Present Disclosure

According to an aspect of the present disclosure, there is provided a dial including a metallic base, a metal layer formed at a surface of the base, an intermediate layer disposed on a surface side of the metal layer and having light transmittance, and a first dot layer partially disposed on a surface side of the intermediate layer, in which the first dot layer has a plurality of first metal dots formed by ink jet printing using a metal nano ink containing a first metal, and a first metal film made of a second metal different from the first metal and formed at a surface side of the first metal dot.

According to the dial of the present disclosure, the first metal film made of the second metal different from the first metal is formed at the surface side of the first metal dot formed by ink jet printing using the metal nano ink containing the first metal, so that a dial with a high-grade feeling can be provided as the cost is reduced, and the practicality can also be improved. That is, since the first metal film is laminated on the surface side of the first metal dot and is not exposed on the surface of the dial, a relatively inexpensive metal nano ink such as silver or copper can be used as the first metal. In addition, by using a precious metal such as gold or platinum, which is more expensive than silver or copper, as the second metal that forms the first metal film exposed on the surface side of the dial, the color development and brightness of the pattern portion by the dots can be improved, and a pattern with a high-grade feeling can be expressed. In addition, since the first metal film formed of the second metal is laminated on the surface side of the first metal dot, the amount of the second metal used can be reduced as compared with a case where a metal nano ink containing the second metal is printed to form a pattern. Therefore, a dial with a high-grade feeling as the cost is reduced can be provided, and the practicality such as mass productivity can also be improved.

In addition, the background portion of the pattern formed by the first metal dot and the first metal film is composed of a metal layer that can be visually recognized from the surface side of the dial via the intermediate layer having light transmittance, so that the design of the background portion can also be improved, and a dial with high design as a whole can be provided.

Further, since the intermediate layer formed of a synthetic resin material or the like having light transmittance is provided on the surface side of the metal layer, when the plating treatment is performed using the first metal dot as a plating base, the first metal film can be formed only at the surface side of the first metal dot, and the film formation treatment of the first metal film can be easily performed.

In the dial of the present disclosure, the first metal is preferably a metal having a greater ionization tendency than the second metal.

By using the first metal as a metal having a greater ionization tendency than the second metal, the second metal is deposited on the surface of the first metal dot by the displacement plating of non-electrolytic plating, and the first metal film can be easily formed.

In the dial of the present disclosure, the first metal is preferably silver or copper, and the second metal is preferably gold or platinum.

When the first metal is silver or copper and the second metal is gold or platinum, the first metal of silver or copper has a greater ionization tendency than the second metal of gold or platinum, so that the first metal film can be easily formed by displacement plating. In addition, by using silver or copper as the first metal, the cost of the metal nano ink can be reduced as compared with the case of using gold or platinum. In addition, by using a precious metal such as gold or platinum as the second metal, the color development and brightness of the pattern portion by the dots can be enhanced, and a dial with a high-grade feeling can be provided.

In the dial of the present disclosure, it is preferable to further include a protective layer having light transmittance provided on a surface side of the first dot layer.

By providing the protective layer made of a synthetic resin material or the like having light transmittance on the surface side of the first dot layer, the first dot layer is not exposed to the surface of the dial, so that the first dot layer can be prevented from being peeled off.

In the dial of the present disclosure, it is preferable to further include a decorative layer disposed between the metal layer and the intermediate layer and made of a colored paint having light transmittance.

By providing the decorative layer with the colored paint having light transmittance between the metal layer and the intermediate layer, the background color of the dial can be set to the color of the decorative layer. As a result, the background color can be set according to the pattern or the color development of the first dot layer, and the design of the dial can be further enhanced.

In the dial of the present disclosure, it is preferable that a second dot layer that is partially disposed on the surface side of the intermediate layer and is disposed at a position different from that of the first dot layer is further provided, and the second dot layer has a plurality of second metal dots formed by ink jet printing using a metal nano ink containing a third metal, and a second metal film made of a fourth metal different from the second metal and formed at a surface side of the second metal dot.

Since a pattern can be formed at the surface side of the intermediate layer by the first dot layer and the second dot layer, and the second metal constituting the first metal film of the first dot layer and the fourth metal constituting the second metal film of the second dot layer are made of different metals, a pattern can be formed with the first dot layer and the second dot layer having different color development, and the design of the dial can be further enhanced.

In the dial of the present disclosure, the first dot layer further includes a bonding film provided between the first metal dot and the first metal film, and the bonding film is made of a fifth metal different from the second metal.

By providing the bonding film made of the fifth metal different from the second metal, for example, copper or nickel, between the first metal dot and the first metal film, the adhesion of the first metal film to the first metal dot can be enhanced, and the first metal film can be prevented from being peeled off.

According to another aspect of the present disclosure, there is provided a dial including a non-metallic base, and a first dot layer partially disposed on a surface side of the base, in which the first dot layer has a plurality of first metal dots formed by ink jet printing using a metal nano ink containing a first metal, and a first metal film made of a second metal different from the first metal and formed at a surface side of the first metal dot.

According to the dial of the present disclosure, the first metal film made of the second metal different from the first metal is laminated on the surface side of the first metal dot formed by ink jet printing using the metal nano ink containing the first metal, so that a relatively inexpensive metal nano ink such as silver or copper can be used as the first metal. By using a precious metal such as gold or platinum, which is more expensive than silver or copper, as the second metal that forms the first metal film, the color development and brightness of the pattern portion by the dots can be improved, and a pattern with a high-grade feeling can be expressed. In addition, since the first metal film formed of the second metal is laminated on the surface side of the first metal dot, the amount of the second metal used can be reduced as compared with a case where a metal nano ink containing the second metal is printed to form a pattern. Therefore, a dial with a high-grade feeling as the cost is reduced can be provided, and the practicality such as mass productivity can also be improved.

In addition, since a non-metallic base such as a shell or a synthetic resin material is used, although the first metal film is laminated by displacement plating, the base itself is not plated, so that it is not necessary to provide an intermediate layer that prevents plating of the base, and the cost can be reduced. Further, since the background portion of the pattern formed in the first dot layer can be formed of the base, a dial that takes advantage of the material feeling of the base can be provided.

A timepiece of the present disclosure includes the dial and a case that houses the dial.

According to the present disclosure, the timepiece having the dial in which a pattern having enhanced color development and brightness can be formed as the cost is reduced and practicality such as mass productivity is also improved, can be provided.

According to yet still another aspect of the present disclosure, there is provided a method for manufacturing a dial, the method including forming a metal layer at a surface of a metallic base, forming an intermediate layer having light transmittance at a surface side of the metal layer, partially forming a plurality of first metal dots formed by ink jet printing using a metal nano ink containing a first metal at a surface side of the intermediate layer, and forming a first metal film made of a second metal different from the first metal at a surface side of each of the first metal dots.

According to the present disclosure, the dial can be manufactured by forming a metal layer, an intermediate layer, a first metal dot, and a first metal film at the surface of the base, so that a dial with a high-grade feeling as the cost is reduced can be provided, and the practicality such as mass productivity can also be improved.

## Claims

1. A dial comprising:
a metallic base;
a metal layer formed at a surface of the base;
an intermediate layer disposed on a surface side of the metal layer and having light transmittance; and
a first dot layer partially disposed on a surface side of the intermediate layer, wherein
the first dot layer has
a plurality of first metal dots formed by ink jet printing using a metal nano ink containing a first metal, and
a first metal film made of a second metal different from the first metal and formed at a surface side of the first metal dot.

2. The dial according to claim 1, wherein
the first metal is a metal having a greater ionization tendency than the second metal.

3. The dial according to claim 1 or 2, wherein
the first metal is silver or copper, and
the second metal is gold or platinum.

4. The dial according to any one of claims 1 to 3, further comprising:
a protective layer having light transmittance and provided on a surface side of the first dot layer.

5. The dial according to any one of claims 1 to 4, further comprising:
a decorative layer disposed between the metal layer and the intermediate layer and made of a colored paint having light transmittance.

6. The dial according to any one of claims 1 to 5, further comprising:
a second dot layer partially disposed on the surface side of the intermediate layer, the second dot layer being disposed at a position different from that of the first dot layer, wherein
the second dot layer has
a plurality of second metal dots formed by ink jet printing using a metal nano ink containing a third metal, and
a second metal film made of a fourth metal different from the second metal and formed at a surface side of the second metal dot.

7. The dial according to any one of claims 1 to 6, wherein
the first dot layer further includes a bonding film provided between the first metal dot and the first metal film, and
the bonding film is made of a fifth metal different from the second metal.

8. A dial comprising:
a non-metallic base; and
a first dot layer partially disposed on a surface side of the base, wherein
the first dot layer has
a plurality of first metal dots formed by ink jet printing using a metal nano ink containing a first metal, and
a first metal film made of a second metal different from the first metal and formed at a surface side of the first metal dot.

9. A timepiece comprising:
the dial according to any one of claims 1 to 8; and
a case that houses the dial.

10. A method for manufacturing a dial, the method comprising:
forming a metal layer at a surface of a metallic base;
forming an intermediate layer having light transmittance at a surface side of the metal layer;
partially forming a plurality of first metal dots formed by ink jet printing using a metal nano ink containing a first metal at a surface side of the intermediate layer; and
forming a first metal film made of a second metal different from the first metal at a surface side of each of the first metal dots.
